# EUROPÄISCHE PATENTANMELDUNG

(11) **EP 4 629 017 A1**
(43) Veröffentlichungstag der Anmeldung: **08.10.2025**
(21) Anmeldenummer: 25164799.6
(22) Anmeldetag: 19.03.2025
(51) Int. Cl.: G05D 1/242, G05D 1/243, G05D 1/224, A47L 9/00, G01C 21/00, G05D 105/10, G05D 107/40, G05D 109/10, G05D 111/10, G05D 1/648

(54) **VERFAHREN ZUM ERSTELLEN EINER UMGEBUNGSKARTE**

(30) Priorität: 03.04.2024 DE 102024203061
(71) Anmelder: BSH Hausgeräte GmbH, 81739 München (DE)
(72) Erfinder: Wittkowski, Josephine, 83278 Traunstein (DE); Haug, Sebastian, 70771 Leinfelden-Echterdignen (DE)

(57) **Zusammenfassung**

Es wird Verfahren zum Erstellen einer Umgebungskarte (4) eines Umgebungsbereichs für den Betrieb eines mobilen, selbstfahrenden Geräts, insbesondere Bodenreinigungsgeräts wie ein Saug- und/oder Kehr- und/oder Wischroboter, angegeben, das folgende Verfahrensschritte umfasst: Erfassen des Umgebungsbereichs mit einem Sensor (1) des mobilen, selbstfahrenden Geräts; Erstellen einer Karte des Umgebungsbereichs mittels eines SLAM-Verfahrens; Erfassen von bildhaften Darstellungen eines Bodenbelags des Umgebungsbereichs mit einer Kamera (2) des mobilen, selbstfahrenden Geräts; Bestimmen eines Bodentyps des Bodenbelags basierend auf den erfassten bildhaften Darstellungen mit Hilfe einer künstlichen Intelligenz auf Basis eines Machine Learning Modells; und Überlagern der Karte mit dem Bodentyp durch Darstellen des Bodentyps in der Karte des Umgebungsbereichs.

## Beschreibung

Die Erfindung betrifft ein Verfahren zum Erstellen einer Umgebungskarte eines Umgebungsbereichs für den Betrieb eines mobilen, selbstfahrenden Geräts, insbesondere Bodenreinigungsgeräts wie ein Saug- und/oder Kehr- und/oder Wischroboter, ein mobiles, selbstfahrendes Gerät, ein Computerprogrammprodukt sowie einen computerlesbaren Datenträger.

Batteriebetriebene Staubsaugerroboter mit Wischfunktion unterstützen einen Nutzer dabei, seine Haushaltsarbeit so effizient wie möglich zu erledigen. Dabei kartiert der Staubsaugerroboter mit Hilfe eines Sensors, beispielsweise eines LIDAR-Sensors oder eine Kamera, die Wohnumgebung des Nutzers. Insbesondere erstellt der Roboter während der Reinigung eine Umgebungskarte der Wohnung. In dieser Umgebungskarte ist in der Regel der Grundriss der Wohnfläche mit den darin enthaltenen Wänden, Möbeln und Gegenständen als Konturen angezeigt. Die Karte wird in einer mit dem Roboter über WLAN verbundenen App auf dem mobilen Endgerät des Nutzers dargestellt. Der Nutzer kann sogenannte No-Go Zonen auf der Umgebungskarte einrichten, die beim Reinigen ausgelassen werden sollen. Beispielsweise können Teppichböden beim Nassreinigen des Roboters ausgespart werden.

Roboter verfügen neben dem LIDAR-Sensor häufig über eine Kamera. Die Bilder der Kamera können mit einer Kl-Instanz ausgewertet werden. Dabei werden Objekte erkannt und soweit möglich klassifiziert.

Staubsaugerroboter können meist erkennen, auf welchem Typ von Fußboden sie sich gerade befinden. Vor einem auf den Boden gerichteten Saugmund befindet sich eine motorbetriebene Bürstenwalze. Der Vergleich mit Erfahrungswerten des veränderten Widerstands im Stromkreislauf beim Antrieb der Bürstenwalze lässt darauf schließen, ob der Roboter sich auf Teppich oder Hartboden (Keramikfliesen, Laminat, Holz, PVC, ...) befindet. Die Bodenerkennung kann alternativ mittels eine diskreten Sensors erfolgen.

Um dem Nutzer eine verbesserte Wiedererkennbarkeit realer Orte in der Umgebungskarte der App zu ermöglichen und somit eine erleichterte Bedienung des Roboters bereitzustellen, können bebilderte Umgebungskarten Verwendung finden. Hierbei werden Kamerabilder des Roboters aufgenommen und schrittweise dazu verwendet, beispielsweise eine Bodendarstellung in der App zu realisieren. Die Umgebungskarte wird dadurch in der App unter Einbindung der Bilddarstellungen des Roboters realistisch dargestellt. Hierbei können jedoch Einflüsse zu Verzerrungen in den Kartenbildern führen, die je nach Situation und Fahrtrichtung unterschiedlich sein können. Weitere Einflüsse auf die Bilddarstellungen können wechselnde Beleuchtungszustände, wie Tageslicht oder künstliches Licht, Reflektionen oder Blendungen haben. Derartige Situationen können ebenfalls negative Einflüsse auf die bebilderte Karte haben, beispielsweise, wenn Bodenflächen in Teilen mit unterschiedlichen Helligkeiten dargestellt werden.

Aufgabe der Erfindung ist es, ein verbessertes Verfahren zum Erstellen einer Umgebungskarte bereitzustellen, bei dem insbesondere der tatsächliche Bodentyp verschiedener Räume graphisch dargestellt werden, wobei negative Einflüsse auf die Bilddarstellungen reduziert beziehungsweise vollständig vermieden werden.

Diese Aufgabe wird durch ein Verfahren zum Erstellen einer Umgebungskarte eines Umgebungsbereichs für den Betrieb eines mobilen, selbstfahrenden Geräts mit den Merkmalen des Anspruchs 1 gelöst. Vorteilhafte Ausgestaltungen und Weiterbildungen sind Gegenstand der Unteransprüche.

Erfindungsgemäß umfasst ein Verfahren zum Erstellen einer Umgebungskarte eines Umgebungsbereichs für den Betrieb eines mobilen, selbstfahrenden Geräts, insbesondere Bodenreinigungsgeräts wie ein Saug- und/oder Kehr- und/oder Wischroboter, folgende Verfahrensschritte:
- Erfassen des Umgebungsbereichs mit einem Sensor des mobilen, selbstfahrenden Geräts,
- Erstellen einer Karte des Umgebungsbereichs mittels eines SLAM-Verfahrens,
- Erfassen von bildhaften Darstellungen eines Bodenbelags des Umgebungsbereichs mit einer Kamera des mobilen, selbstfahrenden Geräts,
- Bestimmen eines Bodentyps des Bodenbelags basierend auf den erfassten bildhaften Darstellungen mit Hilfe einer künstlichen Intelligenz auf Basis eines Machine Learning Modells, und
- Überlagern der Karte mit dem Bodentyp durch Darstellen des Bodentyps in der Karte des Umgebungsbereichs zum Erstellen der Umgebungskarte.

Die Kamera, die primär zur Erkennung von Objekten dient, um eine Kollision mit Hindernissen zu vermeiden und den Fundort der Objekte auf der Umgebungskarte anzuzeigen, nimmt also bildhafte Darstellungen, insbesondere Fotos, von Fußböden auf, über die das Gerät fährt. Anschließend wird der Bodentyp des erfassten Bodenbelags mithilfe eines Software-Algorithmus bestimmt. Als Software-Algorithmus findet insbesondere ein Machine Learning Modell Anwendung. Ein Machine Learning-Modell ist ein Modell, das darauf trainiert wurde, bestimmte Arten von Bodentypen zu erkennen. Ein Modell wird vorzugsweise mit Hilfe von Supervised Learning, optional mit anderen Lernverfahren anhand von Daten (Bodentypen) trainiert, indem ein (Software-) Algorithmus verwendet wird, welcher diese Daten (Bodentypen) zum Lernen verwendet. Nachdem das Modell trainiert ist, können Daten (Bodentypen) analysieren beziehungsweise klassifiziert werden, die zum Beispiel zuvor noch nicht gekannt wurden.

Dadurch kann der vorliegend vorhandene Bodentyp eindeutig oder so eindeutig wie möglich bestimmt werden, was dem Nutzer auf der Umgebungskarte angezeigt wird. Damit ermöglicht sich eine präzise manuelle Einzeichnung von Zonen auf der Umgebungskarte, beispielsweise reine Trockenreinigungszonen, in denen der Fußboden nicht nass gereinigt werden soll.

Weiter kann der Bodenbelag fotorealistisch auf der Umgebungskarte in den jeweiligen Räumen dargestellt werden. Dies ermöglicht dem Nutzer eine schnellere Orientierung auf der Umgebungskarte. Der Zusammenhang zwischen dem auf der Umgebungskarte abgebildeten Raum und dem tatsächlichen Raum in dem Umgebungsbereich des Nutzers kann mit Hilfe des grafisch dargestellten Fußbodenbelags mit Vorteil einfach hergestellt werden. Eine mögliche Fehlinterpretation des Bodentyps wird verhindert. Das Vertrauen des Nutzers in die Fähigkeiten beziehungsweise Intelligenz des Geräts wächst mit Vorteil.

Unter einem mobilen, selbstfahrenden Gerät ist insbesondere ein Bodenreinigungsgerät zu verstehen, welches insbesondere im Haushaltsbereich Bodenflächen autonom bearbeitet. Hierunter zählen unter anderem Saug-, Wisch- und/oder Kehrroboter wie beispielsweise Staubsaugerroboter. Diese Geräte arbeiten im Betrieb (Reinigungsbetrieb) bevorzugt ohne oder mit möglichst wenig Nutzereingriff. Beispielsweise fährt das Gerät selbsttätig in einen vorgegebenen Raum, um entsprechend einer vorgegebenen und einprogrammierten Verfahrensstrategie den Boden zu reinigen.

Unter der zu bearbeitenden Bodenfläche ist jegliche zu reinigende Raumfläche zu verstehen. Hierunter fallen unter anderem auch Teilbereiche einzelner Räume, einzelne Flächen einer Wohnung, einzelne Räume einer Wohnung und/oder die gesamte Bodenfläche der vollständigen Wohnung beziehungsweise des Wohnraums.

Unter einer Karte des Umgebungsbereichs ist insbesondere jeglicher zwei- oder dreidimensionale Grundriss zu verstehen, der geeignet ist, die Umgebung des Bodenbearbeitungsbereichs mit all seinen Wänden, Hindernissen und Gegenständen darzustellen.

Unter einer Umgebungskarte ist insbesondere jegliche zwei- oder dreidimensionale Karte zu verstehen, die geeignet ist, die Umgebung des Bodenbearbeitungsbereichs mit all seinen Wänden, Hindernissen und Gegenständen darzustellen. Diese Umgebungskarte wird zum Beispiel aus SLAM auch für Lokalisierungen verwendet. Diese SLAM-Karte oder eine davon abgeleitete Version zeigt beispielsweise die Umgebungskarte mit dem Bodenbearbeitungsbereich und mit den darin enthaltenen Möbeln und Wänden skizzenartig an. Zudem ist in der Umgebungskarte der Bodentyp dargestellt. Die Umgebungskarte setzt sich demnach zusammen aus der erstellten Karte und überlagerten Bodentypdarstellungen.

Unter Hindernissen sind jegliche Objekte und/oder Gegenstände zu verstehen, die in einem Bodenbearbeitungsbereich angeordnet sind, beispielsweise dort liegen oder stehen, und die Bearbeitung durch das mobile, selbstfahrende Gerät beeinflussen, insbesondere behindern und/oder stören, wie beispielsweise Möbel, Wände, Vorhänge, Teppiche, und ähnliches.

Die Umgebungskarte mit den Hindernissen wird vorzugsweise in einer App an einer vorzugsweise tragbaren Eingabevorrichtung dargestellt. Diese dient insbesondere der Visualisierung zu einer möglichen Interaktion für den Nutzer.

Unter einer Eingabevorrichtung ist vorliegend insbesondere jegliches Gerät zu verstehen, das für einen Benutzer tragbar ist, das außerhalb des mobilen, selbstfahrenden Geräts angeordnet, insbesondere extern und/oder differenziert vom mobilen, selbstfahrenden Gerät ist, und zu einer Anzeige, Bereitstellung, Übermittlung und/oder Übertragung von Daten mittels der Schnittstelle geeignet ist, wie beispielsweise ein Handy, ein Smartphone, ein Tablet und/oder ein Computer beziehungsweise Laptop.

Auf der Eingabevorrichtung ist die App, insbesondere eine Reinigungsgeräte-App, installiert, die zur Kommunikation des mobilen, selbstfahrenden Geräts mit der Eingabevorrichtung dient und insbesondere eine Visualisierung des Bodenbearbeitungsbereichs, also des zu reinigenden Wohnraums oder der zu reinigenden Wohnung beziehungsweise Wohnbereichs ermöglicht. Die App zeigt dem Nutzer dabei vorzugsweise den zu reinigenden Bereich als Umgebungskarte sowie jegliche Hindernisse an.

Unter einer Kamera ist insbesondere jegliches Bildaufnahmegerät zu verstehen, das geeignet ist, Bilder (vorzugsweise Farbbilder, oder optional Graustufenbilder, Tiefenbilder oder ähnliches) seiner Umgebung aufzunehmen, vorzugsweise mit hoher Bildqualität. Die Kamera ist dabei Teil des Geräts und insbesondere in oder an diesem integriert. Die Kamera ist dabei so an dem Gerät angeordnet, dass mittels der Kamera bildhafte Darstellungen des Bodenbelags während der Explorationsfahrt und/oder Reinigungsfahrt aufgenommen werden können.

Unter einem Sensor ist insbesondere ein LIDAR-Sensor zu verstehen, der geeignet ist, seinen Umgebungsbereich vorzugsweise in einem 360°-Sichtfeld zu erfassen. Der Sensor ist dabei Teil des Geräts und insbesondere in oder an diesem integriert.

Unter einem SLAM-Verfahren (SLAM: Simultaneous Localization and Mapping) ist eine simultane Posenbestimmung (Pose bedeutet Position und Orientierung des Geräts) und Kartierung zu verstehen, bei dem das Gerät gleichzeitig die Umgebungskarte erstellt und seine räumliche Lage innerhalb dieser Karte schätzt. Es dient damit dem Erkennen von Hindernissen und unterstützt somit die autonome Navigation.

Unter einem Überlagern der Karte mit dem Bodentyp ist ein Einfügen von fotografischen Darstellungen des Bodentyps positionsgenau in der Karte zu verstehen, sodass dem Nutzer sowohl der Bodentyp als auch seine räumliche Lage relativ zur Karte in der Umgebungskarte angezeigt wird.

Bei einer vorteilhaften Ausführungsform werden zum Bestimmen des Bodentyps die bildhaften Darstellungen mit einer Datenbank von Fotos von Bodenbelägen abgeglichen. Insbesondere werden die Fotos mit einer Datenbank von Fotos verglichen, die ein ganzes Spektrum von handelsüblichen Bodenbelägen beinhaltet, darunter unter anderem Teppiche in verschiedenen Farben, Mustern und Gewebeart, Parkettfußböden mit verschiedenen Verlegemustern der Stäbchen, Fliesen in unterschiedlichen Farben, Materialien, Oberflächenstrukturen, Größen sowie die dazwischenliegenden Fugen und Kunststoffböden. Mit Vorteil können ohne Nutzerhilfe (also gerätebasiert) die aufgenommenen Darstellungen wahrgenommen beziehungsweise erkannt und mit in der Datenbank vorhandenen Darstellungen abgeglichen und zugeordnet werden, sodass sich eine eindeutige Identifizierung des vorhandenen Bodentyps ermöglicht.

Die Datenbank von Fotos von Bodenbelägen zur Bestimmung eines Bodentyps können auf einer von dem Gerät externen Speichereinheit bereitgestellt werden. Beispielsweise ist die Datenbank über eine Rechnereinheit oder direkt auf einer Internetplattform beziehungsweise im Internet verfügbar, auf die das Gerät zugreifen kann.

Das Ableiten von Bodentypinformationen aus den bildhaften Darstellungen mit Hilfe einer künstlichen Intelligenz erfolgt also auf Basis des Machine Learning Modells. Hierbei kann ein Abgleich der aktuell aufgenommenen bildhaften Darstellungen direkt mit der Datenbank oder Liste von bekannten Bodentypen erfolgen. Alternativ kann ein überwachter Lernprozess (supervised learning) verwendet werden, bei dem im Trainingsschritt mittels gelabelter Daten - die aus bekannten bildhaften Darstellungen und zugehörigem Bodentyp bestehen - ein Machine Learning Modell trainiert wird. In einer weiteren Alternative können anstatt echter bildhaften Darstellungen einer Wohnung auch simulierte Daten einer photorealistischen Simulation Verwendung finden. Weiter alternativ wird eine Kombination echter Daten mit simulierten Daten verwendet. Das maschinelle Lernverfahren kann aktuelle Formen von Deep Learning verwenden, oder semisupervised Learning oder andere einem Machine Learning Fachmann bekannte Verfahren einsetzten.

Bei einer weiteren vorteilhaften Ausführungsform wird der Bodentyp durch ein entsprechendes Symbol auf der Umgebungskarte dargestellt. Beispielsweise wird auf Teppichböden ein entsprechendes Teppich-Symbol, auf Fliesen ein entsprechendes Fliesen-Symbol und auf Parkett ein entsprechendes Parkettsymbol in der Karte eingeblendet, sodass sich der Nutzer auf der Umgebungskarte orientieren kann.

Bei einer weiteren vorteilhaften Ausführungsform wird der Bodentyp neben der Symboldarstellung zusätzlich oder alternativ fotorealistisch auf der Umgebungskarte dargestellt. Fotorealistisch bedeutet hierbei, dass der Bodentyp als Foto oder fotoähnliche Darstellung in der Karte angezeigt wird. Hierbei ist es nicht zwingend notwendig, dass das mit der Kamera des Geräts aufgenommene Foto des Bodentyps Verwendung findet. Vielmehr kann beispielsweise auch eine Fotodarstellung aus der Datenbank Verwendung finden.

Bei einer weiteren vorteilhaften Ausführungsform werden die Fotos aus der Perspektive der Kamera des Geräts verwendet, um eine Darstellung des Bodentyps in der Karte zu generieren. Das Gerät nimmt an unterschiedlichen Positionen und Orientierungen im Raum Fotos des Fußbodens auf, wie zum Beispiel eines im Raum befindlichen Teppichs oder des in Raum verlegten Fliesenbodens. Anschließend projiziert ein Software-Algorithmus die Fotos, so dass nur noch der Bodenbelag zu sehen ist, und setzt die Fotos entsprechend der Aufnahmeorte auf der Umgebungskarte wiederum zu einer Karte zusammen. Eine anschließende Verarbeitung mit einem Algorithmus, vorzugsweise eine Segmentierung, kann die Umgebungskarte auf Basis der fotografierten Bodenbeläge in Teppich- und Nicht-Teppich-Bereiche unterteilen, wodurch das Gerät automatisch Bereiche erkennt, die nur trocken oder die sowohl nass als auch trocken gereinigt werden sollen.

Bei einer weiteren vorteilhaften Ausführungsform wird der Bodentyp als künstliche Graphik, die die Farben und/oder Muster des Bodenbelags wiederspiegelt, auf der Umgebungskarte dargestellt. Auf Basis der Fotos, die das Gerät eines Bodentyps des Bodenbelags in einem Raum aufgenommen hat, werden die Farben und Muster des Bodenbelags also in einer neuen künstlichen Graphik widergespiegelt. Bei einem gemusterten Teppich macht das Gerät beispielsweise während einer Fahrt 50 Fotos, auf denen verschiedene Bereiche des Teppichs zu sehen sind. Ein Software-Algorithmus erzeugt auf Basis dieser Fotos eine Graphik, auf der die Farben und die Musterung des Teppichs repräsentativ dargestellt sind. Ebenso wird zum Beispiel ein um den Teppichbereich herum angeordneter Parkettfußboden mit Holzstäbchen dargestellt, die den Farben des tatsächlich in dem Raum ausliegenden Fußbodens ähnlich sind. Vorzugsweise werden für die Erzeugung der Grafik nicht nur Fotos von einer einzigen Reinigungsfahrt des Geräts verwendet, sondern mehrere Reinigungsfahrten unter verschiedenen Lichtverhältnissen abhängig von Tageszeit und unter Verwendung von künstlichem Licht.

Bei einer weiteren vorteilhaften Ausführungsform wird der Bodentyp als Pixelgraphik, die die Farben und/oder Muster des Bodenbelags wiederspiegelt, auf der Umgebungskarte dargestellt. Auf Basis der Fotos, die das Gerät eines Bodentyps des Bodenbelags in einem Raum aufgenommen hat, werden die in dem Bodenbelag vorkommenden Farben und deren Häufigkeit auf Pixel-Niveau ausgewertet. Anschließend werden mittels eines Software-Algorithmus Pixel, die die Farben des Belags repräsentieren, in einer gewichteten Häufigkeit so angeordnet, dass die Farben und eventuelle Musterung des Bodenbelags repräsentativ abgebildet werden. Ein blauer Teppich mit Rautenmuster ist beispielsweise als blau gefärbter Bereich dargestellt, der Parkettfußboden als Bereich mit Pixeln in den Farben der Holzstäbchen, die zuvor vom Gerät fotografiert wurden. Der Nutzer kann anhand der realistisch widergegebenen Farben gedanklich den kartierten Raum schnell mit dem Raum der wirklichen Wohnumgebung verknüpfen. Mögliche Fehldarstellungen wie eine inhomogene Helligkeit des Teppichbereichs durch Artefakt der Zusammensetzung und Projektion der Einzelbilder können vermieden werden.

Bei einer weiteren vorteilhaften Ausführungsform wird eine der erfassten bildhaften Darstellungen anhand vorbestimmter Kriterien ausgewählt, beschnitten, skaliert und mehrmals aneinandergereiht und auf der Umgebungskarte dargestellt. Eines der Fotos, die das Gerät in einem Raum von einem dort ausliegenden Fußbodenbelag gemacht hat, wird also ausgewählt, um damit die Fläche diesen Typs Fußboden auf der Karte in der App zu füllen. Hierzu wird das ausgewählte Foto beschnitten und skaliert, so dass es in x- und in y-Richtung mehrmals aneinandergelegt den kompletten Bereich ausfüllt (nahtlose Textur). Vorzugsweise wird das Bild, welches als Endlostextur Verwendung findet, nicht nur aus einem Bild pro Bodentyp des Geräts erzeugt, sondern mehrere Fotos werden zu einem Texturbild kombiniert.

Bei einer weiteren vorteilhaften Ausführungsform wird ein Blueprint von dem bestimmten Bodentyp aus der Datenbank erstellt und auf der Umgebungskarte dargestellt. Das Gerät nutzt die mit der Kamera vom Fußboden aufgenommenen Fotos, um sowohl den Fußbodentypen (beispielsweise Holzdielen, Parkettstäbchen, Teppich mit oder ohne Musterung, PVC) mit Maserung als auch die Farbgebung zu erkennen. Um den Bodenbelag in der Umgebungskarte darzustellen, wird ein Blueprint eines Ausschnitts des erkannten Bodentyps inklusive Maserung erstellt und in der erkannten Farbgebung eingefärbt. Anschließend wird der zugehörige Fußbodenbereich in der Umgebungskarte mit dem eingefärbten Blueprint ausgefüllt.

Bei einer weiteren vorteilhaften Ausführungsform wird das Abgleichen mit der Datenbank und damit das Erkennen des Bodentyps und das realistische Darstellen in der Umgebungskarte automatisch von dem Gerät durchgeführt. Diese Verfahrensschritte sind demnach nutzerunabhängig und erfolgen autonom. Eine Nutzerhandlung wie beispielsweise ein Starten oder ähnliches ist nicht erforderlich.

Bei einer alternativen Ausführungsform wählt der Nutzer aus der Datenbank den Bodenbelag aus und lässt einen vom Gerät als Bereich mit einem bestimmten Bodenbelag erkannten Raumteil entsprechend ausfüllen. Hierfür findet eine Eingabemaske in der App Verwendung. Unabhängig von der Qualität der aufgenommenen Fotos bei unterschiedlichen Lichtverhältnissen kann dadurch eine ästhetische Darstellung des Bodentyps erreicht werden. Weiter alternativ kann der Nutzer mit Hilfe seines mobilen Endgeräts selbst ein Foto des Bodenbelags aufnehmen, es in die App hochladen und für die Darstellung des Fußbodens auf der Umgebungskarte verwenden.

Bei einer weiteren vorteilhaften Ausführungsform wird die Umgebungskarte basierend auf dem bestimmten Bodentyp in unterschiedliche Bereiche eingeteilt. In den unterschiedlichen Bereichen ist das Gerät vorzugsweise derart programmiert, dass es bereichsabhängig unterschiedlich agiert beziehungsweise ein bereichsabhängiges unterschiedliches Reinigungs- und/oder Fahrverhalten durchführt. Vorzugsweise wird die Umgebungskarte basierend auf dem bestimmten Bodentyp eingeteilt in erste Bereiche, die lediglich trocken zu reinigen sind, und zweite Bereiche, die sowohl nass als auch trocken zu reinigen sind. Dadurch ist es dem Gerät möglich, entsprechende Bereiche zu identifizieren und sein Reinigungsverhalten wie reine Trockenreinigung oder Mischreinigung (Nass- und Trockenreinigung) entsprechend anzupassen. Zusätzlich oder alternativ können in verschiedenen Bereichen Bodentyp-abhängig unterschiedliche Feuchtegrade bei der Nassreinigung Anwendung finden. Weiter können abhängig vom Bodentyp Bereiche definiert sein, die bei der Reinigung durch das Gerät ausgelassen werden (sogenannte Bodentyp-abhängige No-Go Zonen/Bereiche).

Bei einer weiteren vorteilhaften Ausführungsform werden die bildhaften Darstellungen von verschiedenen Positionen im Umgebungsbereich aufgenommen und mit einem Software-Algorithmus überarbeitet, sodass der Bodenbelag isoliert dargestellt wird. Störende Umgebungseinflüsse des Umgebungsbereichs können so vermieden und insbesondere ausgelöscht werden.

Weiter betrifft die Erfindung ein mobiles, selbstfahrendes Gerät, insbesondere Bodenreinigungsgerät wie ein Saug- und/oder Kehr- und/oder Wischroboter, das einen Sensor und eine Kamera umfasst, und das dazu eingerichtet ist, ein erfindungsgemäßes Verfahren zum Erstellen der Umgebungskarte des Umgebungsbereichs durchzuführen.

Es versteht sich, dass neben dem Verfahren und dem Gerät auch ein Computerprogrammprodukt, das Befehle umfasst, die bei der Ausführung des Programms durch das Gerät dieses veranlassen, das erfindungsgemäße Verfahren auszuführen, zum Umfang dieser Erfindung gehört. Ebenso gehört ein computerlesbares Medium, auf dem ein solches Computerprogrammprodukt gespeichert ist, zum Umfang dieser Erfindung.

Jegliche Merkmale, Ausgestaltungen, Ausführungsformen und Vorteile das Verfahren betreffend finden auch in Zusammenhang mit dem erfindungsgemäßen Gerät, Computerprogrammprodukt und computerlesbarem Medium Anwendung, und umgekehrt.

Die Erfindung wird anhand der nachfolgenden, lediglich Beispiele darstellenden Ausführungen der Erfindung näher erläutert. Es zeigen:
- Figur 1:: eine schematische Ansicht eines mobilen, selbstfahrenden Geräts, das dazu eingerichtet ist, ein erfindungsgemäßes Verfahren zum Erstellen einer Umgebungskarte eines Umgebungsbereichs durchzuführen,
- Figur 2: eine schematische Ansicht eines Ausführungsbeispiels einer Umgebungskarte, die mit einem erfindungsgemäßes Verfahren erstellt ist,
- Figur 3: eine fotorealistische Ansicht eines Ausführungsbeispiels einer Umgebungskarte, die mit einem erfindungsgemäßes Verfahren erstellt sind,
- Figuren 4A, 4B: jeweils schematische Ansichten von Ausführungsbeispielen einer Umgebungskarte, die mit einem erfindungsgemäßes Verfahren erstellt ist,
- Figuren 5A, 5B: jeweils schematische Ansichten von Ausführungsbeispielen eines Nutzereingabefelds beziehungsweise einer Umgebungskarte, die mit einem erfindungsgemäßes Verfahren erstellt ist, und
- Figur 6: ein Flussdiagramm eines Ausführungsbeispiels eines erfindungsgemäßen Verfahrens zum Erstellen einer Umgebungskarte.

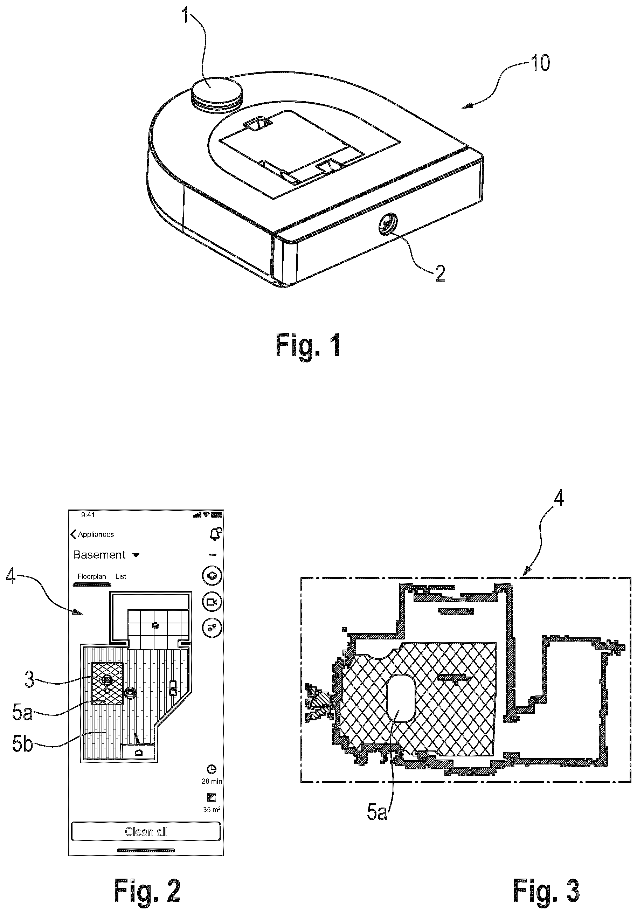

In Figur 1 ist ein mobiles, selbstfahrendes Gerät 10 dargestellt, das insbesondere ein Saugroboter ist. Der Saugroboter nimmt seine Umgebung mit verschiedenen Sensoren wahr, insbesondere mit einem Lidar-Sensor 1, der zum Erstellen einer Umgebungskarte mit den Konturen von Wänden, Objekten und Hindernissen genutzt wird. Darüber hinaus verfügt der Saugroboter über eine Kamera 2, die Objekte vor dem Saugroboter erfassen kann und beispielsweise für eine Objekterkennung und Objektklassifizierung verwendet wird. Ein Sichtfeld der Kamera 2 erfasst dabei auch Abschnitte des Bodenbelags. Diese Teile der Bilddarstellung werden genutzt, um eine Bodenkartierung durchzuführen. Unter Einbeziehung der Roboterposition und Roboterorientierung in Bezug auf die Umgebungskarte zum Zeitpunkt der Bildaufnahme kann die entsprechende Bodenfläche in der Umgebungskarte mit den Bilddarstellungen gefüllt werden.

Hierfür wird der Saugroboter 10 nach seiner Inbetriebnahme auf eine Explorationsfahrt geschickt, bei der der Saugroboter die Umgebung erkundet, seine Umgebungskarte erstellt und zeitgleich die Bodenflächen als bebilderte Karte in die Umgebungskarte integriert. Während der Explorationsfahrt und bei sich anschließenden Reinigungsfahrten des Saugroboters erfasst die Kamera 2 Flächen des Bodens. Die Kamera 2, die primär zur Erkennung von Objekten dient, um die Kollision mit Hindernissen zu vermeiden und den Fundort der Objekte auf der Karte anzuzeigen, nimmt demnach auch Fotos von den Fußböden auf, über die der Roboter fährt. Mit Hilfe einer Künstlichen Intelligenz auf Basis eines Machine Learning Modells werden die Fotos mit einer Datenbank von Fotos trainiert, die das ganze Spektrum der handelsüblichen Fußböden beinhaltet, darunter Teppiche in verschiedenen Farben, Mustern und Gewebeart, Parkettfußböden mit verschiedenen Verlegemustern der Stäbchen, Fliesen in unterschiedlichen Farben, Materialien, Oberflächenstrukturen, Größen sowie die dazwischenliegenden Fugen, Kunststoffböden usw. Damit kann der Fußbodentyp klassifiziert und insbesondere bestimmt werden, was dem Nutzer auf der Umgebungskarte angezeigt wird und ihm zum Beispiel die präzise manuelle Einzeichnung von Zonen auf der Umgebungskarte, in denen der Fußboden nicht nass gereinigt werden soll, ermöglicht.

Hierzu wird, wie es in Figur 2A dargestellt ist, der fotografierte und mit der Datenbank abgeglichene Bodentyp auf der Umgebungskarte 4 als Symbol 3 angezeigt. Insbesondere wird der Bodentyp mit künstlich erzeugten graphischen Symbolen 3 angegeben. Beispielsweise wird ein auf einem Parkettboden 5b liegender Teppich 5a mit einem Teppichsymbol 3 versehen.

Zusätzlich kann der Fußboden fotorealistisch auf der Umgebungskarte 4 in den jeweiligen Räumen dargestellt werden. Dies ermöglicht dem Nutzer eine schnelle Orientierung auf der Umgebungskarte 4, da ein Zusammenhang zwischen dem auf der Umgebungskarte 4 abgebildete Raum und dem tatsächlichen Raum in der Wohnumgebung des Nutzers aufgrund des grafisch dargestellten Fußbodenbelags leicht hergestellt werden kann. Eine mögliche Fehlinterpretation des Symbols für den Fußbodentyp, wie das in Figur 2 dargestellte Teppichsymbol, kann verhindert werden, wenn zusätzlich ersichtlich ist, welcher Bodenbelag in dem dazugehörigen Raum ausliegt.

Für die graphische Darstellung der Fußbodenbeläge auf der Umgebungskarte 4 ergeben sich unterschiedliche Möglichkeiten, wie sie in Zusammenhang mit den Figuren 2, 3, 4A, 4B, 5A und 5B erläutert sind.

Wie es in Figur 2 gezeigt ist, können zur graphischen Darstellung des Bodentyps Farben und Muster des Bodenbelags in einer neuen künstlichen Graphik auf Basis der Fotos, die der Roboter von einer Sorte Fußbodenbelag in einem Raum aufgenommen hat, widergespiegelt werden. Bei einem gemusterten Teppich 5a beispielsweise macht der Roboter während einer Fahrt 50 Fotos, auf denen verschiedene Bereiche des Teppichs 5a zu sehen sind. Ein Software-Algorithmus kann anschließend auf Basis dieser Fotos eine Graphik erzeugen, auf der die Farben und die Musterung des Teppichs 5a repräsentativ dargestellt sind. Ebenso wird ein um den Teppichbereich herum angeordneter weiterer Bodentyp, beispielsweise ein Parkettfußboden 5b mit Holzstäbchen, dargestellt, die den Farben des tatsächlich in dem Raum ausliegenden Fußbodens sehr ähnlich sind. Bevorzugt werden für die Erzeugung der Grafik nicht nur Fotos von einer einzigen Reinigungsfahrt des Roboters verwendet, sodass verschiedene Lichtverhältnisse abhängig von der Tageszeit und von der Verwendung von künstlichem Licht berücksichtigt werden.

In Figur 3 ist eine Umgebungskarte einer Wohnung dargestellt, die zur graphischen Darstellung des Bodentyps aus Fotos, die an den jeweiligen Orten auf der Umgebungskarte durch den Roboter vom Fußboden aufgenommen wurden, zusammengesetzt ist. Insbesondere werden Fotos aus der Perspektive der Kamera des Roboters verwendet um eine Darstellung des Fußbodens zu generieren. Der Roboter nimmt an vielen Orten im Raum Fotos des Fußbodens auf. Anschließend berechnet und projiziert ein Software-Algorithmus die Fotos, so dass nur noch der Fußbodenbelag zu sehen ist, und setzt die Fotos entsprechend der Aufnahmeorte auf der Umgebungskarte 4 wiederum zu einer Karte zusammen. Anschließend kann eine Segmentierung die Umgebungskarte 4 auf Basis der fotografierten Bodenbeläge in Teppich- und Nicht-Teppich-Bereiche unterteilen, sodass der Roboter erkennt, welche Bereiche automatisch nur trocken, oder sowohl nass als auch trocken zu reinigen sind.

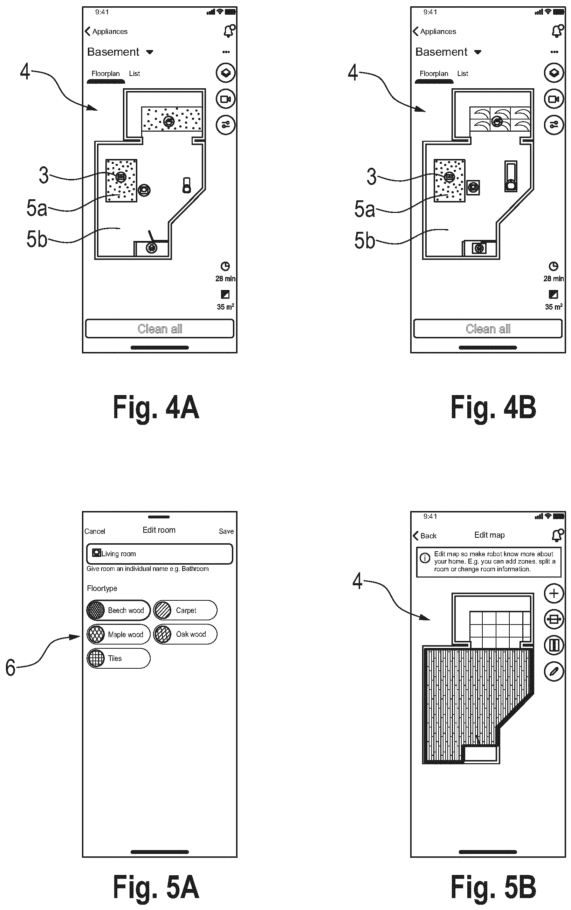

Zur graphischen Darstellung des Bodentyps können, wie es in Figur 4A dargestellt ist, die in dem Bodenbelag vorkommenden Farben und deren Häufigkeit, auf Basis der Fotos, die der Roboter von einer Sorte Fußbodenbelag in einem Raum aufgenommen hat, auf Pixel-Niveau ausgewertet werden. Anschließend ordnet ein Software-Algorithmus Pixel, die die Farben des Belags repräsentieren, in einer gewichteten Häufigkeit so an, dass die Farben und eventuelle Musterungen des Fußbodenbelags repräsentativ abgebildet werden. Ein blauer Teppich 5a mit Rautenmuster wird beispielsweise als blau gefärbter Bereich dargestellt, der Parkettfußboden 5b als Bereich mit Pixeln in den Farben der Holzstäbchen, die zuvor vom Roboter abfotografiert wurden. Der Nutzer kann anhand der realistisch widergegebenen Farben gedanklich den kartieren Raum schnell mit dem Raum der wirklichen Wohnumgebung verknüpfen. Zudem ist die grafische Darstellung der Umgebungskarte 4 konsistent, homogen, farblich und ästhetisch ansprechend. Fehldarstellungen wie zum Beispiel eine inhomogene Helligkeit des Teppichbereichs und mögliche Artefakte der Zusammensetzung und Projektion der Einzelbilder in das Fußbodenbild können mit Vorteil vermieden werden.

Zur graphischen Darstellung des Bodentyps kann, wie es in Figur 4B dargestellt ist, eines der Fotos, die der Roboter in einem Raum von einem dort ausliegenden Fußbodenbelag gemacht hat, ausgewählt werden, um damit die Fläche dieses Typs Fußboden auf der Umgebungskarte 4 in der App aufzufüllen. Hierzu wird das ausgewählte Foto beschnitten und skaliert, so dass es, in x- und in y-Richtung mehrmals aneinandergelegt, den kompletten Bereich ausfüllt (nahtlose Textur). Ein Foto des im Zimmer liegenden blauen Teppichs 5a mit Rautenmuster wird beispielsweise verwendet, um den Bereich im Wohnzimmer, in dem mit Hilfe der Kamera dieser Teppich 5a erkannt wurde, in der Umgebungskarte 4 in der App auszufüllen. Ein Foto des Parkettfußbodens 5b in der Umgebung des blauen Teppichs 5a wird verwendet, um den restlichen Bereich des Raumes auf der Umgebungskarte 4 auszufüllen, indem das selbe Foto mehrmals aneinandergelegt wird. Vorzugsweise wird das Bild, welches als Endlostextur verwendet wird, nicht nur aus einem Bild pro Bereich (Holz, Teppich) des Roboters erzeugt, sondern eine Kombination mehrerer Fotos des jeweiligen Bodentyps wird als ein Texturbild verwendet. So kann der Nutzer den Fußbodenbelag auf der Umgebungskarte 4 in der App sofort wiedererkennen und sich schnell orientieren, welcher Raum der Wohnumgebung wo abgebildet ist.

Anstatt die möglichst realistische Darstellung des erkannten Fußbodens automatisiert durch den Roboter selbst durchführen zu lassen, kann der Nutzer aus einer Datenbank 6 in der App den Fußbodenbelag auswählen, wie es in Figur 5A dargestellt ist, und den zuvor vom Roboter als Bereich mit einem bestimmten Fußbodenbelag erkannten Raumteil entsprechend ausfüllen lassen, wie es in Figur 5B gezeigt ist. Die Eingabemaske für den Nutzer ist in Figur 5A beispielhaft dargestellt. Unabhängig von der Qualität der aufgenommenen Fotos bei unterschiedlichen Lichtverhältnissen kann dadurch eine ästhetische Darstellung des Fußbodentyps erreicht werden. Alternativ kann der Nutzer mit Hilfe seines mobilen Endgeräts selbst ein Foto des Fußbodenbelags aufnehmen, es in die App hochladen und für die Darstellung des Fußbodens auf der Umgebungskarte 4 verwenden.

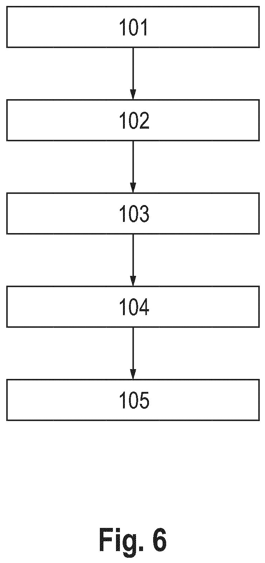

Ein Ablauf des Verfahrens zum Erstellen einer Umgebungskarte ist in Figur 6 dargestellt. In Schritt 101 erfasst der Roboter den Umgebungsbereich mit einem Sensor, insbesondere seinem LIDAR-Sensor. Hierzu führt der Roboter eine Explorationsfahrt aus. Anschließend erstellt der Roboter eine Karte des Umgebungsbereichs mittels eines SLAM-Verfahrens (Schritt 102). Während der Explorationsfahrt oder auch bei anschließenden Reinigungsfahrten erfasst der Roboter bildhafte Darstellungen des Bodenbelags des Umgebungsbereichs mit seiner Kamera (Schritt 103). Im anschließenden Schritt 104 werden vom Roboter die aufgenommenen bildhaften Darstellungen mit einer Datenbank von Fotos von Bodenbelägen zur Bestimmung eines Bodentyps abgeglichen. Der oder die ermittelten Bodentypen werden anschließend im Schritt 105 graphisch in der Karte des Umgebungsbereichs durch Überlagern der Karte mit dem Bodentyp dargestellt. Hierzu finden unterschiedliche Möglichkeiten, wie sie in Zusammenhang mit den Figuren 2, 3, 4A, 4B, 5A und 5B erläutert sind, Anwendung.

## Patentansprüche

1. Verfahren zum Erstellen einer Umgebungskarte (4) eines Umgebungsbereichs für den Betrieb eines mobilen, selbstfahrenden Geräts, insbesondere Bodenreinigungsgeräts wie ein Saug- und/oder Kehr- und/oder Wischroboter, folgende Verfahrensschritte umfassend:
- Erfassen des Umgebungsbereichs mit einem Sensor (1) des mobilen, selbstfahrenden Geräts,
- Erstellen einer Karte des Umgebungsbereichs mittels eines SLAM-Verfahrens,
- Erfassen von bildhaften Darstellungen eines Bodenbelags des Umgebungsbereichs mit einer Kamera (2) des mobilen, selbstfahrenden Geräts,
- Bestimmen eines Bodentyps des Bodenbelags basierend auf den erfassten bildhaften Darstellungen mit Hilfe einer künstlichen Intelligenz auf Basis eines Machine Learning Modells, und
- Überlagern der Karte mit dem Bodentyp durch Darstellen des Bodentyps in der Karte des Umgebungsbereichs zum Erstellen der Umgebungskarte.

2. Verfahren nach Anspruch 1, wobei zum Bestimmen des Bodentyps die bildhaften Darstellungen mit einer Datenbank von Fotos von Bodenbelägen abgeglichen werden.

3. Verfahren nach einem der vorhergehenden Ansprüche, wobei der Bodentyp durch ein entsprechendes Symbol (3) auf der Umgebungskarte (4) dargestellt wird.

4. Verfahren nach einem der vorhergehenden Ansprüche, wobei der Bodentyp fotorealistisch auf der Umgebungskarte (4) dargestellt wird.

5. Verfahren nach einem der vorhergehenden Ansprüche, wobei der Bodentyp als künstliche Graphik, die die Farben und/oder Muster des Bodenbelags wiederspiegelt, auf der Umgebungskarte (4) dargestellt wird.

6. Verfahren nach einem der vorhergehenden Ansprüche, wobei der Bodentyp als Pixelgraphik, die die Farben und/oder Muster des Bodenbelags wiederspiegelt, auf der Umgebungskarte (4) dargestellt wird.

7. Verfahren nach einem der vorhergehenden Ansprüche, wobei eine der erfassten bildhaften Darstellungen anhand vorbestimmter Kriterien ausgewählt, beschnitten, skaliert und mehrmals aneinandergereiht und auf der Umgebungskarte (4) dargestellt wird.

8. Verfahren nach einem der vorhergehenden Ansprüche, wobei ein Blueprint von dem bestimmten Bodentyp aus der Datenbank erstellt und auf der Umgebungskarte (4) dargestellt wird.

9. Verfahren nach einem der vorhergehenden Ansprüche, wobei das Abgleichen mit der Datenbank automatisch von dem Gerät durchgeführt wird.

10. Verfahren nach einem der vorhergehenden Ansprüche, wobei die Umgebungskarte (4) basierend auf dem bestimmten Bodentyp eingeteilt wird in erste Bereiche, die lediglich trocken zu reinigen sind, und zweite Bereiche, die sowohl nass als auch trocken zu reinigen sind.

11. Verfahren nach einem der vorhergehenden Ansprüche, wobei die bildhaften Darstellungen von verschiedenen Positionen im Umgebungsbereich aufgenommen und mit einem Software-Algorithmus überarbeitet werden, sodass der Bodenbelag isoliert dargestellt wird.

12. Mobiles, selbstfahrendes Gerät, insbesondere Bodenreinigungsgerät wie ein Saug- und/oder Kehr- und/oder Wischroboter, das einen Sensor (1) und eine Kamera (2) umfasst, und das dazu eingerichtet ist, eine Umgebungskarte (4) eines Umgebungsbereichs gemäß einem der vorhergehenden Ansprüche zu erstellen.

13. Computerprogrammprodukt, umfassend Befehle, die bei der Ausführung des Programms durch das Gerät dieses veranlassen, das Verfahren gemäß einem der vorhergehenden Ansprüche 1 bis 11 auszuführen.

14. Computerlesbarer Datenträger, auf dem das Computerprogrammprodukt nach Anspruch 13 gespeichert ist.
